**Europäisches Patentamt**

**European Patent Office**

**Office européen des brevets**

(19)

(11) Veröffentlichungsnummer : **0 166 749**
**B1**

(12) **EUROPÄISCHE PATENTSCHRIFT**

(45) Veröffentlichungstag der Patentschrift :
**15.03.89**

(21) Anmeldenummer : **85900093.7**

(22) Anmeldetag : **01.12.84**

(86) Internationale Anmeldenummer :
**PCT/EP 84/00381**

(87) Internationale Veröffentlichungsnummer :
**WO/8502731 (20.06.85 Gazette 85/14)**

(51) Int. Cl.⁴ : **H 03 L   7/18**

(54) **PHASENREGELKREIS.**

(30) Priorität : **14.12.83 DE 3345142**

(43) Veröffentlichungstag der Anmeldung :
**08.01.86 Patentblatt 86/02**

(45) Bekanntmachung des Hinweises auf die Patenterteilung : **15.03.89 Patentblatt 89/11**

(84) Benannte Vertragsstaaten :
**AT BE CH DE FR GB LI LU NL SE**

(56) Entgegenhaltungen :
**EP--A-- 0 004 341**
**DE--A-- 2 413 604**
**DE--A-- 2 543 171**
**EDN, vol. 13, no. 9, August 1968, Denver (US), "VCO**
**Multiplies Pulse Court-Exactly", pp. 72-74**

(73) Patentinhaber : **TELEFUNKEN Fernseh und Rundfunk**
**GmbH**
**Göttinger Chaussee 76**
**D-3000 Hannover 91 (DE)**

(72) Erfinder : **SCHOLZ, Werner**
**Osterstr. 20**
**D-3007 Gehrden (DE)**

(74) Vertreter : **Einsel, Robert, Dipl.-Ing.**
**E W D Electronic-Werke Deutschland GmbH Patent-**
**und Lizenzabteilung Göttinger Chaussee 76**
**D-3000 Hannover 91 (DE)**

## Beschreibung

Die Erfindung betrifft einen Phasenregelkreis nach dem Oberbegriff des Anspruchs 1.

Ein derartiger Phasenregelkreis ist in der DE-A-2543171 beschrieben. Bei dieser bekannten Schaltung ist der Frequenzteiler mit einem Eingang des Vor/Rück-Zählers verbunden und ein Referenzfrequenzgenerator mit dem anderen Eingang. Der Referenzfrequenzgenerator wird dabei als phasen- und frequenzkonstant angenommen und im gefangenen Zustand schaltet der Vor/Rückwärts-Zähler abwechselnd einen Wert vorwärts und einen Wert rückwärts. Mit der bekannten Schaltung ist beabsichtigt, eine in weiten Bereichen variable Oszillatorfrequenz über lange Zeit phasenstarr mit einer quarzgenauen Referenzfrequenz zu synchronisieren. Ist dagegen die Referenzfrequenz nur im Mittel konstant, schwankt ansonsten aber periodisch um einen bestimmten Wert, so paßt sich die Ausgangsfrequenz des steuerbaren Oszillators nur entsprechend der verhältnismäßig großen Zeitkonstante, mit der sich die Regelspannung verändern kann, an. Würde man die Zeitkonstante sehr stark verkleinern, so wäre die Änderung zwar schneller, dafür die Frequenzstabilität des steuerbaren Oszillators aber auch störanfälliger.

Der Erfindung liegt die Aufgabe zugrunde, einen Phasenregelkreis nach dem Oberbegriff des Anspruchs 1 so zu verbessern, daß er ausreichend schnell und linear auf Änderungen einer Eigangsfrequenz reagiert, jedoch gegen impulsartige Störungen unempfindlich ist.

Diese Aufgabe wird bei einem Phasenregelkreis nach dem Oberbegriff des Anspruchs 1 durch im kennzeichnenden Teil angegebenen Merkmale gelöst.

Ein Phasenregelkreis mit ähnlichen Eigenschaften ist auch in der EP-A-4341 beschrieben, dort sind aber die Frequenzen nicht identisch und der Oszillator wird nicht selbst, sondern an seiner Stelle ein Schieberegister geregelt. Der Oszillator schwingt mit starrer Frequenz.

Die Erfindung wird im folgenden anhand der Zeichnungen näher erläutert. Darin zeigen

Fig. 1 das Blockschaltbild einer bekannten PLL-Schaltung,

Fig. 2 das Blockschaltbild einer erfindungsgemäßen PLL-Schaltung,

Fig. 3 eine Ausführungsform für einen digital steuerbaren Oszillator,

Fig. 4 eine weitere Ausführungsform des DCO (Digital Controlled Oscillator = DCO),

Fig. 5 Signalverläufe zur Erläuterung der Wirkungsweise der Schaltungen nach Fig. 2 bis 4,

Fig. 6 eine weitere Ausführungsform der erfindungsgemäßen PLL-Schaltung.

Fig. 7 Signalverläufe zur Erläuterung der Wirkungsweise der Schaltung nach Fig. 6.

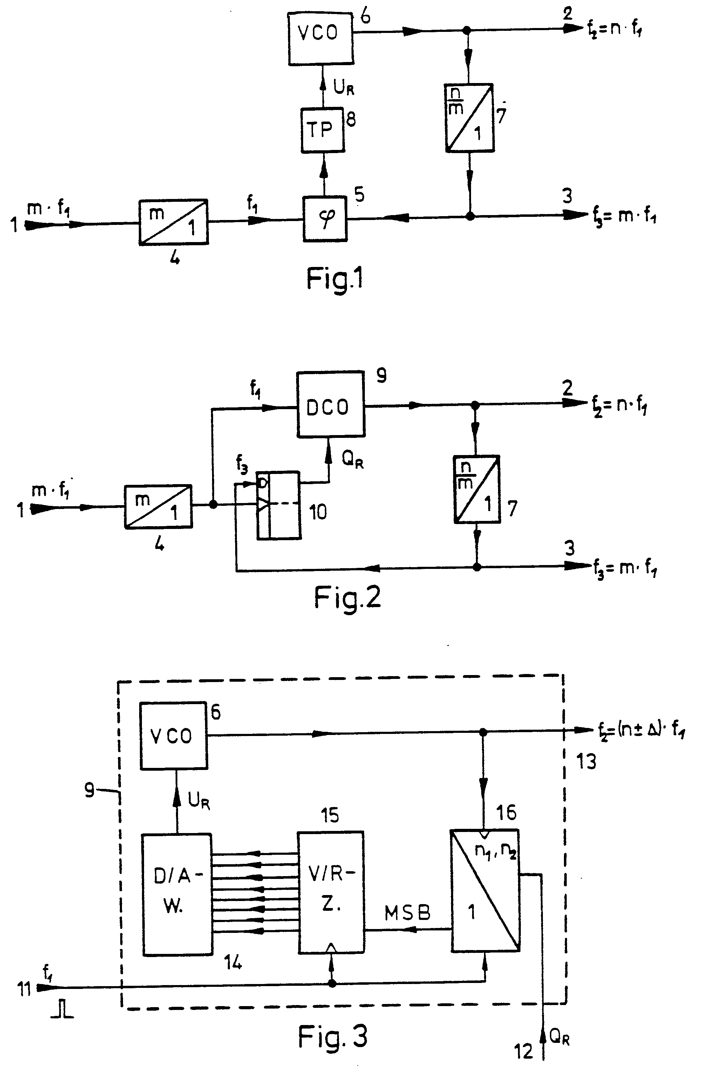

Fig. 1 zeigt eine bekannte PLL-Schaltung, die z. B. aus einer mit einem Zeitfehler behafteten Eingangsfrequenz $m \cdot f_1$ am Eingang 1 konstante Frequenzen $f_2$ bzw. $f_3$ an den Ausgängen 2 und 3 erzeugt. Die Grundwelle der Zeitschwankung hat dabei eine Periodendauer von m Perioden der Eingangsfrequenz. Die Eingangsfrequenz $m \cdot f_1$ ist z. B. die Zeilenfrequenz eines von einem Videorecorder abgespielten Videosignals. Dann ist m = 625 die Zeilenzahl eines Bildes, und $f_1$ ist die Bildfrequenz. $f_2$ ist dann z. B. die Taktfrequenz, mit der das zwecks Zeitfehlerbeseitigung in einen Pufferspeicher eingelesene Videosignal wieder ausgelesen wird. $f_3$ stellt die Zeilenfrequenz dieses ausgelesenen Signals dar.

Der Phasenvergleich an der Phasenvergleichsstufe 5 erfolgt hier (vgl. DE-A-27 45 375) periodisch mit der Periodendauer des Zeitfehlers, d. h. mit $f_1$ = 25 Hz. Die Eingangsfrequenz $m \cdot f_1$ wird daher über den Frequenzteiler 4 der Phasenvergleichsstufe 5 zugeführt. Der spannungsgesteuerte Oszillator 6 schwingt mit der Frequenz $f_2$. Diese Frequenz wird dem zweiten Eingang der Phasenvergleichsstufe 5 über einen zweiten Frequenzteiler 7 zugeführt, der aus der Frequenz $f_2 = n \cdot f_1$ die Frequenz $f_3 = m \cdot f_1$ erzeugt. Die Phasenvergleichsstufe 5 kann z. B. aus einer Abtast- und Halteschaltung bestehen. Mit der Frequenz $f_3$ wird eine sägezahnförmige Spannung erzeugt, die durch $f_1$ abgetastet wird. Die Ausgangsspannung der Phasenvergleichsstufe wird über einen Tiefpaß 8 als analoge Regelspannung $U_R$ dem Eingang des Oszillators 6 zugeführt. Bei der praktischen Ausführung der hier beschriebenen Schaltung treten folgende Schwierigkeiten auf:

1. Bei einem großen Wert für m, z. B. m = 625, besteht die Gefahr, daß sich ein stabiler Betriebszustand mit einem von m abweichenden Zahlenwert einstellt. Besondere Maßnahmen sind erforderlich, damit beim Fangvorgang stets der richtige Wert m erreicht wird.

2. Bei Ausführung der Phasenvergleichsstufe als Abtast- und Halteschaltung muß bei kleiner Aufladezeitkonstante eine möglichst große Entladezeitkonstante realisiert werden. Ein leicht sägezahnförmiger Verlauf der Regelspannung ist unvermeidbar.

3. Durch Temperatureinflüsse oder Alterung von Bauteilen können Phasenänderungen zwischen $f_1$ und $f_3$ entstehen, die nicht ausgeregelt werden.

Bei der in Fig. 2 dargestellten erfindungsgemäßen PLL-Schaltung treten diese Schwierigkeiten nicht auf. Die Nachteile gemäß Punkt 1 und 3 werden dadurch vermieden, daß der steuerbare Oszillator 9 frequenzgeregelt ist. Die Schwierigkeit gemäß Punkt 2 kann nicht auftreten, da die Beeinflussung der Oszillatorfrequenz zwecks Phaseneinstellung zwischen $f_1$ und $f_3$ nicht durch eine analoge Stellgröße $U_R$ sondern durch eine digitale Stellgröße $Q_R$ erfolgt.

Der Oszillator 9, der hier als digital gesteuerter Oszillator (digital controlled oscillator = DCO) bezeichnet wird, ist durch das binäre Eingangssignal $Q_R$ auf zwei Frequenzwerte einstellbar, die um einen äußerst geringen Wert oberhalb bzw. unterhalb der Sollfrequenz $f_2 = n \cdot f_1$ liegen. Da sich diese geringfügigen Abweichungen auf die Eingangsfrequenz $f_1$ beziehen, ist es erforderlich, die Oszillatorfrequenz durch Frequenzregelung ständig an die Eingangsfrequenz $f_1$ anzupassen. Der DCO besitzt daher einen zusätzlichen Eingang, dem die für die Frequenzregelung erforderliche Bezugsfrequenz $f_1$ zugeführt wird. Die Phasenvergleichsstufe besteht aus dem D-Flip-Flop 10, dessen Ausgangsspannung $Q_R$ dem DCO als Regelspannung zugeführt wird.

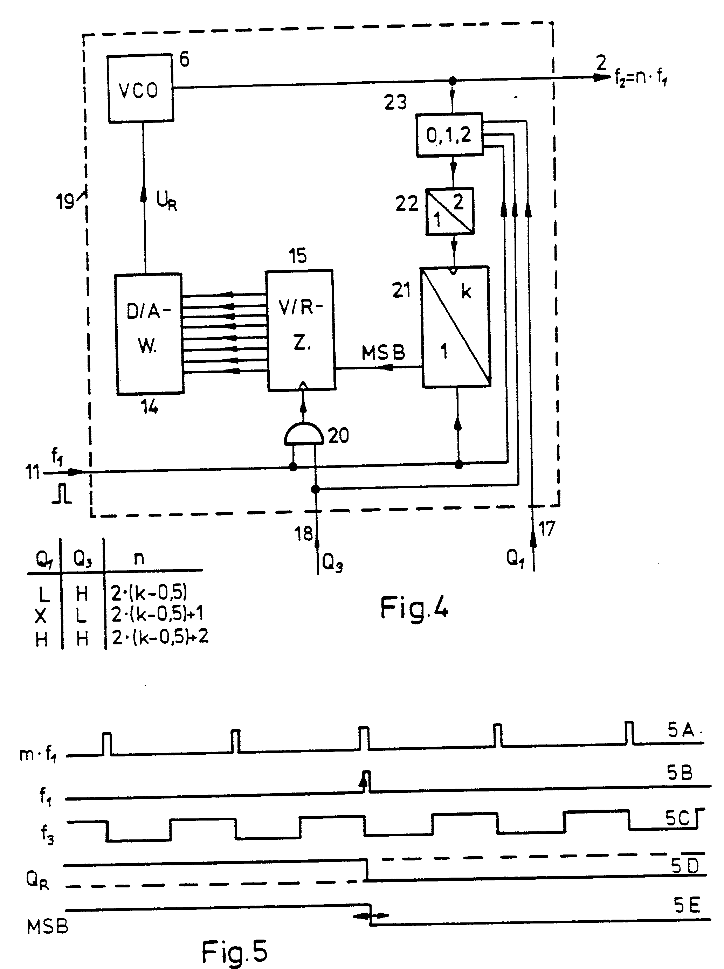

Die Figuren 5A, 5B, 5C und 5D veranschaulichen die Erzeugung der binären Regelspannung $Q_R$ am DCO 9. Fig. 5A zeigt die Impulsspannung $m \cdot f_1$. Dies können z. B. die Zeilenimpulse eines Videosignals sein. Die Frequenz $f_1$ in der zweiten Zeile stellt dann die Bildfrequenz des Videosignals dar. Der Impuls $f_1$ wird zweckmäßigerweise durch Frequenzteilung aus der Zeilenfrequenz $m \cdot f_1$ gewonnen. Dabei sollte $m \cdot f_1$ einer PLL-Schaltung mit kleiner Zeitkonstante entnommen werden. so daß die Impulse $m \cdot f_1$ die Zeitschwankungen des Videosignals noch enthalten, jedoch von Impulsstörungen befreit sind.

Fig. 5C zeigt die aus der Schwingung des DCO durch Frequenzteilung erzeugte Zeilenfrequenz $f_3$. Die mit Hilfe des D-FlipFlops 10 erzeugte Stellgröße $Q_R$ ist in Fig. 5D dargestellt. Der Wert dieser Stellgröße für die Dauer des nächsten Bildes hängt vom Spannungswert der Schwingung $f_3$ während der ansteigenden Flanke des $f_1$-Impulses ab. Die PLL-Schaltung arbeitet einwandfrei, wenn die Zeitabweichung zwischen $f_1$ und $f_3$ kleiner als die Dauer einer halben $f_3$-Periode, d. h. 1/2 Zeilendauer ist. Durch Wahl der Frequenzteilungsverhältnisse kann dieser Wert leicht den jeweiligen Erfordernissen angepaßt werden.

Auf einen weiteren Vorteil der erfindungsgemäßen PLL (Fig. 2) gegenüber der bekannten PLL (Fig. 1) soll an dieser Stelle hingewiesen werden : Die Frequenz $f_1$ sollte wie oben beschrieben möglichst keine Zeitschwankungen mehr enthalten. Trotzdem können einzelne $f_1$-Impulse größere Phasenabweichungen aufweisen. In der bekannten PLL ist die Regelspannung $U_R$ und damit die Oszillatorfrequenz der Phasenabweichung proportional. Bei der erfindungsgemäßen PLL kann höchstens einmal eine falsche Frequenzstufe eingestellt werden. Die Frequenzstufen des DCO können jedoch so klein gewählt werden, daß dadurch noch kein störender Phasenfehler entsteht. Die erfindungsgemäße PLL ist daher gegen Impulsstörungen der Eingangsfrequenz $f_1$ unempfindlicher.

Fig. 3 zeigt ein Beispiel für die Ausführung des DCO als Digitalschaltung. Dieser DCO besteht aus einem VCO 6, der seine Steuerspannung $U_R$ vom Ausgang eines D/A-Wandlers 14 erhält. Die Binärzahl, die den Spannungswert am Ausgang des D/A-Wandlers bestimmt, ist in einem Vor-/Rückzähler 15 gespeichert. Dieser Vor-/Rückzähler zählt die Impulse der Eingangsfrequenz $f_1$. Dabei wird die Zählrichtung jeweils durch das Ergebnis eines Frequenzvergleichs zwischen $f_1$ und $f_2$ am Ausgang 13 bestimmt. Der Frequenzvergleich erfolgt mit dem Zähler 16. Dieser Zähler wird bei jedem $f_1$-Impuls am Eingang 11 so gestartet, daß das MSB seiner Ausgangssignale nach $n_1$ bzw. $n_2$ Perioden der Frequenz $f_2$ einen Pegelübergang von « H » nach « L » ausführt (Fig. 5E). Ob dieser Pegelübergang nach $n_1$ oder $n_2$ Perioden der Frequenz $f_2$ erfolgt, bestimmt die Steuerspannung $Q_R$ am Eingang 12. Das MSB des Zählers 16 bestimmt die Zählrichtung des Vor-/Rückzählers 15.

Die genaueren Zusammenhänge dieses Frequenzvergleichs sollen anhand des in Fig. 5 unten dargestellten Spannungsverlaufs erläutert werden. Als Anhaltspunkt für die Dimensionierung eines DCOs 9 kann zunächst gelten, daß für zwei benachbarte $U_R$-Stufen gilt :

$$\Delta f_2 / f_1 \approx n_2 - n_1$$

Für das Beispiel wurde gewählt : $n_1 = n$, $n_2 = n + 1$. Wenn nun der Zähler auf $n_1$ eingestellt ist und das MSB des Zählers 16 z. Zt. des $f_1$-Impulses bereits auf « L » ist, dann zählt der Zähler Zwischen zwei $f_1$-Impulsen bis n. Ist das MSB des Zählers 16 während des $f_1$-Impulses noch auf « H », dann zählt der Zähler zwischen zwei $f_1$-Impulsen bis n-1. Die Frequenzregelung wirkt nun so, daß diese beiden Fälle im Mittel mit gleicher Häufigkeit auftreten. Deshalb wird die Frequenz $f_2$ bei Einstellung des DCO auf $n_1 = n$ etwa auf den Wert $(n - 0,5) \cdot f_1$ geregelt. Bei Einstellung des DCO auf $n_2 = n + 1$ wird entsprechend $f_2$ auf den Wert $(n + 0,5) \cdot f_1$ geregelt. Damit ist dieser DCO für die in Fig. 2 angegebene PLL-Schaltung geeignet.

Die genaue Dimensionierung für den DCO ergibt sich aus den jeweiligen Anforderungen, z. B. höchste zu erzeugende Frequenz, zulässige Frequenz- bzw. Phasenabweichungen und aus den verfügbaren Bauteilen z. B. Stufenzahl des D/A-Wandlers, Stufenzahl der Zähler, Frequenzkonstanz des VCO.

Bei einer ausgeführten Schaltung war z. B. die Oszillatorfrequenz $1\,296 \cdot f_H = 20.25$ MHz. Die Frequenz $f_2$ betrug $81 \cdot f_H$. Sie wurde mit einem zusätzlichen Frequenzteiler aus der Oszillatorfrequenz gewonnen. Außerdem war $f_1 = f_B = 25$ Hz. Bei Verwendung eines 8 bit D/A-Wandlers waren die Zeitschwankungen der mit einer PLL gemäß Fig. 2 erzeugten Schwingungen $+/-$ 2 µs bei Pendelfrequenzen von $\leq 12.5$ Hz.

Zwischen Fang- und Haltebereich war bei dieser digitalen PLL-Schaltung praktisch kein Unterschied feststellbar. Das zeugt von dem außerordentlich guten Fangverhalten der Schaltung. Bei der ausgeführten Schaltung ergab sich für den Fang- und Haltebereich ein relativer Wert von ca. $7 \cdot 10^{-3}$. Dieser Wert und auch das Zeitverhalten der Schaltung kann durch höheren Aufwand für D/A-Wandler, Teilerstufen und evtl. auch durch eine höhere Güte des VCO verbessert werden.

Bei dem DCO 9 wird zwangsläufig mit jedem $f_1$-Impuls die VCO-Frequenz verändert, obwohl es in vielen Fällen vorteilhaft wäre, die eingestellte Frequenzstufe beizubehalten.

Fig. 4 zeigt eine DCO-Schaltung 19 mit den Eingängen 11, 17, 18 und dem Ausgang 2, die dieses ermöglicht. Das Gatter 20 kann die Zuführung des $f_1$-Impulses zum Zähleingang des Vor-/Rückzählers 15 verhindern, z. B. dann, wenn bei zwei aufeinanderfolgenden Phasenvergleichen in der PLL-Schaltung festgestellt wird, daß der Betrag der Phasenabweichung einen vorgegebenen Wert unterschreitet.

Die Einstellung des Zählers für den Frequenzvergleich 21, 22, 23 ist zwar bedeutungslos, solange der Vor-/Rückzähler keinen Zählimpuls erhält. Es ist jedoch wichtig, daß die Zählrichtung des Vor-/Rückzählers beim ersten Zählimpuls nach einer Impulsunterdrückung bereits wieder stimmt. Die Zählrichtung könnte in diesem Fall durch die in der PLL festgestellte Phasenabweichungsrichtung eingestellt werden.

Der einstellbare Zähler für den Frequenzvergleich 21, 22, 23 ist so aufgebaut, daß ein dritter Zählwert einstellbar ist, mit dem die DCO-Frequenz im Mittel auf den Sollwert $n \cdot f_1$ geregelt werden würde. Dieser mittlere Zählwert wird eingestellt, solange dem Vor-/Rückzähler keine Zählimpulse zugeführt werden, d. h. solange $Q_3$ auf « L » ist. Das MSB des Zählers 21 sorgt dann dafür, daß beim ersten wiederauftretenden Zählimpuls die Zählrichtung des Vor-/Rückzählers im Sinne der Phasenkorrektur eingestellt ist. Der Zähler für den Frequenzvergleich besteht aus einem festen Zähler-bis-k 21. aus einem Frequenzteiler 22, der durch zwei teilt, und aus einer Stufe 23, die in Abhängigkeit von den Steuersignalen $f_1$, $Q_1$, $Q_3$ je $f_1$-Periode drei verschiedene Anzahlen von $f_2$-Zählimpulsen unterdrücken kann. Zum Beispiel sind diese Anzahlen 0,1 und 2. Die Zahl n, auf die $f_2 = n \cdot f_1$ in den drei verschiedenen Einstellstufen des DCO geregelt wird, ist in Abhängigkeit von den Steuersignalen $Q_1$ und $Q_3$ angegeben. Für eine Frequenzregelung in der mittleren Stufe wäre selbstverständlich die Sperrung des Gatters 20 aufzuheben.

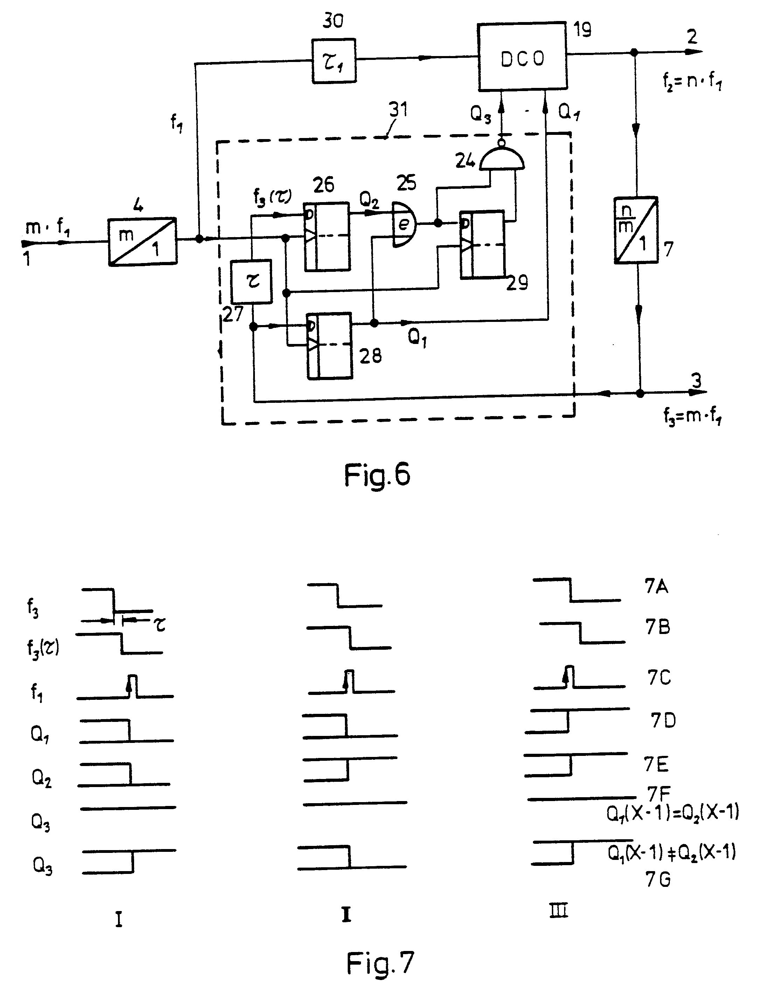

Fig. 6 zeigt eine erfindungsgemäße PLL-Schaltung, deren DCO 19 z. B. der in Fig. 4 angegebenen Schaltung entspricht und deren Phasenvergleichsstufe 31 die digitalen Ausgangssignale $Q_1$ und $Q_3$ zur Steuerung des DCO liefert.

Fig. 7 zeigt Spannungsverläufe zur Erläuterung der Wirkungsweise von Fig. 6. In Spalte I und III von Fig. 7 ist die mit der Phasenvergleichsstufe ermittelte Richtung der Phasenabweichung eindeutig. $Q_3$ ist nach der Phasenmessung « H ». $Q_1$ stellt die Frequenz des DCO 19 auf einen etwas zu hohen bzw. zu tiefen Wert ein, so daß der Phasenabweichung entgegengewirkt wird. In Spalte II liegt die Phasenabweichung zwischen $f_3$ und $f_1$ innerhalb eines Bereiches, dessen Größe durch das Laufzeitglied 27 bestimmt wird. Die Ausgangsspannungen $Q_1$ und $Q_2$ der D-Flip-Flops 26 und 28 nehmen unterschiedliche Werte an. Der Ausgang des EX-OR-Gatters 25 geht auf « H ». Der entsprechende Wert vom vorhergehenden Phasenvergleich ist im Flip-Flop 29 gespeichert. Wenn beide Werte « H » sind. dann geht $Q_3$ am

Ausgang des NAND-Gatters 24 auf « L ». In diesem Fall werden im DCO 19 die anhand von Fig. 4 beschriebenen Maßnahmen durchgeführt.

Auf diese Weise können die bei genügender Feinstufigkeit des D/A-Wandlers ohnehin geringen Phasenpendelungen der erfindungsgemäßen PLL-Schaltung zusätzlich vermindert werden.

Das Laufzeitglied 30 dient als Laufzeitausgleich für die Phasenvergleichsstufe 31.

## Patentansprüche

1. Phasenregelkreis mit einem digital steuerbaren Oszillator (9, 19), der aus einem spannungsgesteuerten Oszillator (6), einem D/A-Wandler (14), einem Vor/Rück-Zähler (15) und einem Zähler (16, 21-23) besteht, wobei der spannungsgesteuerte Oszillator (6) mit einem durch den Zähler (16, 21-23) bestimmten Vielfachen ($n. f_1$) einer Eingangsfrequenz (f1) schwingt, dadurch gekennzeichnet, daß der Zähler (16, 21-23) durch Steuersignale (QR bzw. Q1, Q3), die von einer die Phasenabweichung zwischen Eingangs-($f_1$) und Ausgangsfrequenz ($f_2$) bestimmenden Phasenvergleichsstufe (10 bzw. 31) abgegeben werden auf verschiedene Teilungsverhältnisse (n) einstellbar ist, daß der Vor/Rück-Zähler (15) einen Takteingang und einen Zählrichtungseingang besitzt, und daß diesen Eingängen die Eingangsfrequenz (f1) und die Ausgangsfrequenz (MSB) des einstellbaren Zählers (16, 21-23) zugeführt sind.

2. Phasenregelkreis nach Anspruch 1, dadurch gekennzeichnet, daß die Frequenz des Oszillators (19) auf mehr als zwei Stufen einstellbar ist und daß die Wahl der Einstellstufe durch das Ausgangssignal ($Q_1$, $Q_3$) der Phasenvergleichsstufe (31) in Abhängigkeit von Betrag und Richtung der Phasenabweichung zwischen Eingangsfrequenz ($f_1$) und Ausgangsfrequenz ($f_3$) erfolgt (Fig. 6).

3. Phasenregelkreis nach Anspruch 1, dadurch gekennzeichnet, daß der einstellbare Zähler (16 ; 21 bis 23) die Impulse der Oszillatorfrequenz ($f_2$) zählt und die Zählvorgänge durch Impulse mit der Eingangsfrequenz ($f_1$) gestartet werden (Fig. 3 ; 4).

4. Phasenregelkreis nach Anspruch 3, dadurch gekennzeichnet, daß der einstellbare Zähler (16 ; 21 bis 23) durch einen festen Zähler (21) gebildet wird, an dessen Eingang einzelne Zählimpulse unterdrückt und/oder zugefügt werden können (Fig. 4).

5. Phasenregelkreis nach Anspruch 3 oder 4, dadurch gekennzeichnet, daß der Vor-/Rückzähler (15) die Impulse der Eingangsfrequenz ($f_1$) zählt und die Zählrichtung durch das höchstwertige Bit (MSB) des Zählergebnisses des einstellbaren Zählers (16, 21, 22, 23) bestimmt wird (Fig. 3 ; 4).

6. Phasenregelkreis nach Anspruch 5, dadurch gekennzeichnet, daß einzelne Zählimpulse am Zähleingang des Vor-/Rückzählers (15, 20) unterdrückt werden können und daß dieser Vorgang durch digitale Steuersignale ($Q_1$, $Q_2$, bzw. $Q_3$) ausgelöst wird (Fig. 4 ; 6).

7. Phasenregelkreis nach einem oder mehreren der Ansprüche 1 bis 6, dadurch gekennzeichnet, daß die Ausgänge des Vor-/Rückzählers (15) mit den Eingängen des D/A-Wandlers (14) verbunden sind und die Ausgangsspannung des D/A-Wandlers zur Steuerung des spannungsgesteuerten Oszillators (6) dient (Fig. 3 : 4).

## Claims

1. A phase-locked loop having an oscillator (9, 19) which can be controlled digitally and which consists of a voltage-controlled oscillator (6), a D/A converter (14), a bidirectional counter (15) and a counter (16, 21-23), wherein the voltage-controlled oscillator (6) oscillates at a multiple $(n \cdot f_1)$ of an input frequency $(f_1)$, which multiple is determined by the counter (16, 21-23), characterised in that the counter (16, 21-23) can be set to various division ratios (n) by control signals (QR or Q1, Q3) which are delivered by a phase comparison stage (10 or 31) determining the phase deviation between input frequency $(f_1)$ and output frequency $(f_2)$, that the bidirectional counter (15) has a timing-pulse input and a counting direction input and that the input frequency $(f_1)$ and the output frequency (MSB) of the adjustable counter (16, 21-23) are supplied to these inputs.

2. A phase-locked loop according to Claim 1, characterised in that the frequency of the oscillator (19) can be set to more than two levels and that the selection of the set level is effected by the output signal $(Q_1, Q_3)$ of the phase comparison stage (31) depending on the amount and direction of the phase deviation between input frequency $(f_1)$ and output frequency $(f_3)$ (Figure 6).

3. A phase-locked loop according to Claim 1, characterised in that the adjustable counter (16 ; 21 to 23) counts the pulses of the oscillator frequency $(f_2)$ and the counting operations are started by pulses with the input frequency $(f_1)$ (Figures 3 ; 4).

4. A phase-locked loop according to Claim 3, characterised in that the adjustable counter (16 ; 21 to 23) is formed by a fixed counter (21) at the input of which, individual counting pulses can be suppressed and/or added (Figure 4).

5. A phase-locked loop according to Claim 3 or 4, characterised in that the bidirectional counter (15) counts the pulses of the input frequency $(f_1)$ and the counting direction is determined by the most significant bit (MSB) of the result of the count of the adjustable counter (16, 21, 22, 23) (Figures 3 ; 4).

6. A phase-locked loop according to Claim 5, characterised in that individual counting pulses can be suppressed at the counting input of the bidirectional counter (15, 20) and that this operation is initiated by digital control signals $(Q_1, Q_2$ or $Q_3)$ (Figures 4 ; 6).

7. A phase-locked loop according to any one or more of Claims 1 to 6, characterised in that the outputs of the bidirectional counter (15) are connected to the inputs of the D/A converter (14) and the output voltage of the D/A converter serves to control the voltage-controlled oscillator (6) (Figures 3 ; 4).

## Revendications

1. Circuit de régulation de phase comportant un oscillateur (9, 19), qui peut être commandé numériquement et est constitué par un oscillateur (6) commandé par la tension, un convertisseur numérique/analogique (14), un compteur progressif/régressif (15) et un compteur (15, 21-23), l'oscillateur (6) commandé par la tension oscillant à une fréquence égale à un multiple (n. f1), déterminé par le compteur (21-23), d'une fréquence d'entrée (f1), caractérisé en ce que le compteur (16, 21-23) peut être réglé sur différents rapports de division (n) au moyen de signaux de commande (QR ou Q1, Q3), qui sont délivrés par un étage de comparaison de phase (10 ou 31) déterminant le déphasage entre la fréquence d'entrée (f1) et la fréquence de sortie (f2), que le compteur progressif/régressif (15) possède une entrée de cadence et une entrée du sens de comptage, et que la fréquence d'entrée (f1) et la fréquence de sortie (MSB) du compteur réglable (16, 21-23) sont envoyées à ces entrées.

2. Circuit de régulation de phase suivant la revendication 1, caractérisé par le fait que la fréquence de l'oscillateur 19 peut être réglée sur plus de deux échelons et que le choix de l'étage de réglage est réalisé au moyen du signal de sortie $(Q_1, Q_3)$ de l'étage de comparaison de phase (31) en fonction de la valeur et du sens du déphasage entre la fréquence d'entrée $(f_1)$ et la fréquence de sortie $(f_3)$ (figure 6).

3. Circuit de régulation de phase suivant la revendication 1, caractérisé par le fait que le compteur réglable (16 ; 21 à 23) compte les impulsions arrivant avec la fréquence $(f_2)$ de l'oscillateur et que les processus de comptage sont déclenchés par des impulsions arrivant avec la fréquence d'entrée $(f_1)$ (figures 3 ; 4).

4. Circuit de régulation de phase suivant la revendication 3, caractérisé par le fait que le compteur réglable (16 ; 21 à 23) est formé par un compteur fixe (21), à l'entrée duquel des impulsions de comptage individuelles peuvent être supprimées et/ou ajoutées (figure 4).

5. Circuit de régulation de phase suivant la revendication 3 ou 4, caractérisé par le fait que le compteur progressif/régressif (15) compte les impulsions arrivant avec la fréquence d'entrée $(f_1)$ et que le sens de comptage est déterminé par le bit maximum (MSB) du résultat de comptage du compteur réglable (16, 21, 22, 23) (figures 3 ; 4).

6. Circuit de régulation de phase suivant la revendication 5, caractérisé par le fait que différentes impulsions de comptage peuvent être supprimées à l'entrée de comptage du compteur progressif/régressif (15, 20) et que ce processus est déclenché par des signaux de commande numériques $(Q_1, Q_2$ ou $Q_3)$ (figures 4 ; 6).

7. Circuit de régulation de phase suivant une ou plusieurs des revendications 1 à 6, caractérisé par le fait que les sorties du compteur progressif/régressif (15) sont reliées aux entrées du convertisseur numérique/analogique (14) et que la tension de sortie du convertisseur numérique/analogique est utilisée pour commander l'oscillateur (6) commandé par la tension (figures 3 ; 4).

Fig.1

Fig.2

Fig. 3

| $Q_1$ | $Q_3$ | $n$ |
|-------|-------|-----|
| L | H | $2 \cdot (k-0,5)$ |
| X | L | $2 \cdot (k-0,5)+1$ |
| H | H | $2 \cdot (k-0,5)+2$ |

Fig.4

Fig.5

Fig.6

Fig.7